# EUROPEAN PATENT APPLICATION

(11) **EP 3 220 334 A1**
(43) Date of publication of application: **20.09.2017**
(21) Application number: 16160691.8
(22) Date of filing: 16.03.2016
(51) Int. Cl.: G06Q 30/02

(54) **SYSTEM AND METHOD FOR PROVIDING GENERIC USER PROFILES BASED ON USER BEHAVIOUR**

(71) Applicant: Sony Mobile Communications, Inc, Tokyo 140-0002 (JP)
(72) Inventor: ISBERG, Anders, 23253 ÅKARP (SE); HALLQVIST, Magnus, 224 68 LUND (SE); GUSTAVSSON, Jonas, 234 32 LOMMA (SE)
(74) Representative: Neij & Lindberg AB

(57) **Abstract**

The disclosure pertains to the field of user profiles related to computer related applications, Apps. More particularly, the disclosure relates to a system and a computer related method for providing generic user profile based on user behaviour data. The method comprises providing access to a data storage comprising at least one generic user profile, continuously logging user behaviour data defining a behaviour of a user of the method, transmitting the logged behaviour data to a processing unit for processing the logged user behaviour data, continuously updating the generic user profile of the user based on the processed user behaviour data and updating user profiles of all computer related applications installed on an electronic communication unit of the user based on the updated generic user profile.

## Description

### TECHNICAL FIELD

The disclosure pertains to the field of user profiles related to computer related applications, Apps. More particularly the disclosure relates to usage of user behaviour to continuously updating user profiles related to Apps.

### BACKGROUND ART

The stakes to compete in computer related applications, Apps, and game market is extremely high. Today end users expect that Apps are free to download. App developers have to make revenues by using other ways such as advertising or in-app purchase. The cost for an App developer to acquire a user is expensive and most of the budget is typically spent on advertising.

For developers it is essential to spend their acquisition budget on right users. Therefore it is important to have a good profile of a potential user and to be able to detect when there is a potential opportunity to get the end users attention.

In addition, traditional profiling of the users is very static and does not necessarily fit well with a real user behaviour or actions. For example when a user finds a new type of game, the skill level might change from experienced to beginner if the user starts to play games within a new genre. These distinctions are very essential and distributing those in real-time helps developers and advertising networks, Ad network, to make correct decisions. Hence, there is a need for improving profiling of users of Apps.

A single user may have several Apps downloaded on an electronic device, such as a smartphone, tablet etc. and each App uses separate user profiles and it can be a hassle for users to handle and updating all user profiles for the different Apps.

### SUMMARY OF THE INVENTION

With the above description in mind, then, an aspect of some embodiments of the present invention is to provide a method and system which seeks to mitigate, alleviate or eliminate one or more of the above-identified deficiencies in the art and disadvantages singly or in any combination and to provide a solution wherein a generic user profile may be continuously updated based on the behaviour of the user. This is achieved by continuously logging the behaviour of a user.

The present disclosure is defined by the appended claims. Various advantageous embodiments of the disclosure are set for the by the appended claims as well as by the following description and accompanying drawings.

An aspect of the present invention relates to a computer related method for providing generic user profile based on user behaviour data. The method comprises providing access to a data storage comprising at least one generic user profile, continuously logging user behaviour data defining a behaviour of a user of the method, transmitting the logged behaviour data to a processing unit for processing the logged user behaviour data, continuously updating the generic user profile of the user based on the processed user behaviour data and updating user profiles of all computer related applications, Apps, installed on an electronic communication unit of the user based on the updated generic user profile.

In other words, the method is used to continuously update a single generic user profile which is then used for updating user profiles of all Apps downloaded on an electronic device, such as a smartphone or tablet of the user.

According to some aspects, wherein the generic user profile comprises class related data, the method further comprises continuously matching the logged user behaviour data with user behaviour data in generic user profiles within the data storage for finding at least one user with a generic user profile comprising at least one similar user behaviour data and classifying the matched generic user profiles by updating the class related data of the matched generic user profiles based on the matched user behaviour data.

According to some aspects, the method further comprises updating the generic user profile by setting a status of the class related data to "disabled" when the logged user behaviour data no longer match the class related data.

According to some aspects, the method further comprising monitoring events defined by when class related data is updated and subscribing to the monitored events. In some aspects, the subscription is limited in time.

In some aspects, the method further comprising creating a generic user profile of the user by copying a user profile within the data storage with at least one user characteristics in common with the user if a generic user profile of the user is not in the data storage.

Another aspect of the present invention relates to a system for providing generic user profile based on user behaviour data. The system comprises a data storage comprising at least one generic user profile and an electronic communication unit comprising a computer related application for providing a generic user profile based on user behaviour data of a user of the electronic communication device. The application is configured to providing access to the data storage comprising at least one generic user profile, continuously logging user behaviour data defining a behaviour of the user of the application, transmitting the logged behaviour data to a processing unit for processing the logged user behaviour data, continuously updating the generic user profile of the user based on the processed user behaviour data and updating user profiles of all computer related applications installed on the electronic communication unit of the user based on the updated generic user profile.

In some aspects, wherein the user profile comprises class related data, the application is further configured to continuously matching the logged user behaviour data with user behaviour data in generic user profiles within the data storage for finding at least one user with a generic user profile comprising at least one similar user behaviour data and classifying the matched generic user profiles by updating the class related data of the matched generic user profiles based on the matched user behaviour data.

In some aspects, the application is further configured to updating the generic user profile by setting a status of the class related data to "disabled" when the logged user behaviour data no longer match the class related data.

In some aspect, the application is further configured to monitoring events defined by when class related data is updated and subscribing to the monitored events.

In some aspect, the application is further configured to creating a generic user profile of the user by copying a user profile within the data storage with at least one user characteristics in common with the user if a generic user profile of the user is not in the data storage.

Another aspect of the present invention relates to a computer-readable storage medium including computer-executable instructions. The instruction that, when executed by one or more processing units, perform operations comprising providing access to a data storage comprising at least one generic user profile, continuously logging user behaviour data defining a behaviour of a user, transmitting the logged behaviour data to the one or more processing units for processing the logged user behaviour data, continuously updating the generic user profile of the user based on the processed user behaviour data and updating user profiles of all computer related applications installed on an electronic communication unit of the user based on the updated generic user profile.

In some aspects, wherein the user profile comprises class related data, the instructions further perform operations comprising continuously matching the logged user behaviour data with user behaviour data in generic user profiles within the data storage for finding at least one user with a generic user profile comprising at least one similar user behaviour data and classifying the matched generic user profiles by updating the class related data of the matched generic user profiles based on the matched user behaviour data.

In some aspect, the instructions further perform operations comprising monitoring events defined by when class related data is updated and subscribing to the monitored events.

In some aspect, the instructions further perform operations comprising creating a generic user profile of the user by copying a user profile within the data storage with at least one user characteristics in common with the user if a generic user profile of the user is not in the data storage.

It is an advantage with some embodiments of the invention that they may allow for providing dynamic generic user profiles to be used when to i.e. advertise or sell new apps or updates of apps. Further advantages with this architecture is that user behaviour data from several Apps could be used to create a generic user profile used by all Apps instead of having one user profile for each App.

The features of the above-mentioned embodiments can be combined in any combinations.

### BRIEF DESCRIPTION OF THE DRAWINGS

Further objects, features and advantages of the present invention will appear from the following detailed description of the invention, wherein embodiments of the invention will be described in more detail with reference to the accompanying drawings, in which:
FIG. 1 illustrates the interaction between the parts of the system of FIG 5 when continuously evolving or updating a generic user profile.
FIG. 2 illustrates the method for providing a generic user profile according to some example embodiments.
FIG. 3 illustrates the method for providing a generic user profile according to some example embodiments.
FIG. 4 illustrates the method for providing a generic user profile according to some example embodiments.
FIG. 5 illustrates a system for providing a generic user profile according to some example embodiments.

### DETAILED DESCRIPTION

Embodiments of the present invention will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference signs refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

This invention proposes a system and a method where user behaviour, actions and achievements are logged or tracked and translated to user characteristics in generic user profiles. Users may also be grouped based on their generic user profiles. This model provides a dynamic generic user profile to use when to i.e. advertise or sell new apps or updates of apps.

When an application, App, is launched by a user, the App outsources the processing of data related to user behaviour to a tracking component, Track backend. The App will report user behaviour data with some contextual meaning to the Track backend, for example a user finalized level 1 in a game with score 55 out of 65. The Track backend associates all user behaviour data with one unique anonymous identity, a generic user profile, i.e. it is not revealed how the anonymous identity can be translated into the real identity. The advantage with this architecture is that user behaviour data from several Apps could be used to create a generic user profile used by all Apps instead of having one user profile for each App. In other words, the generic user profile is used to continuously updating the user profiles of all Apps downloaded on the electronic device of the user.

The Track backend processes the user behaviour data and stores the data persistently in a user profile data base. The persistently stored user behaviour data will be processed at least once by some kind of Machine Learning algorithm either based on some kind of model of the user or using a generic machine learning algorithm. Consequently the generic user profile will become more accurate over time based on how the user's interest and behaviour might evolve.

When a new user A is detected in the system, the system checks if there is another user, user B, or a group of users with some user characteristics similarities, e.g. based on a contextual social graph. A generic profile of user A may then be initiated by copying, bootstrapping, the matching profile of user B or a group of users. Once the profile of user A is bootstrapped the profile will be refined based on real usage. A dynamic generic user profile is provided which is continuously evolving or updated.

The generic user profile may be made available to trusted parties that may use the anonymous identity to query the user profile or subscribe to update events of the user profile. The trusted party could be an application developer, application store or an Ad network that could use this information to make decisions whether to show an Ad/Recommendation to a specific user or to tailor the logic in an application.

This could be done for example by matching user generic characteristics with application characteristics. For example a game with the characteristics: cartoon graphics, online multiplayer, competitive, micro transactions, perfectionist could be matched against a player with the same characteristics. Another way of matching the players and the games is to bundle players in different groups and recommend games which other players in the group enjoy.

The user profile is also important when tailoring the application logic. For example, a player with a user profile comprising the user characteristics: experience shooter, perfectionist could skip the first 10 levels that probably are too easy, thus the player will start at level 11 of the game.

An example it could be a player who replays every level until he/she gets the highest score. This behaviour could be profiled as a perfectionist.

Another example could be a player who likes to plays different kinds of online shooter games such person could be profiled a multiplayer first person shooter.

A dynamic group profiles may also be created. A dynamic group profile is a group of users that has a similar user profiles. It is likely that these users are using the same type of applications. The grouping could either be done every time a new event occurs or by some background task. The membership of a user in a group profile is limited in time, if there is no events proving a certain membership the membership in the profile will be revoked. For example, a user starting office mail would join the group "at office" with an 8 hour freshness time. The trusted parties that are authorized to query the profiles can also be authorized to subscribe on events when a user is joining or leaving a user group.

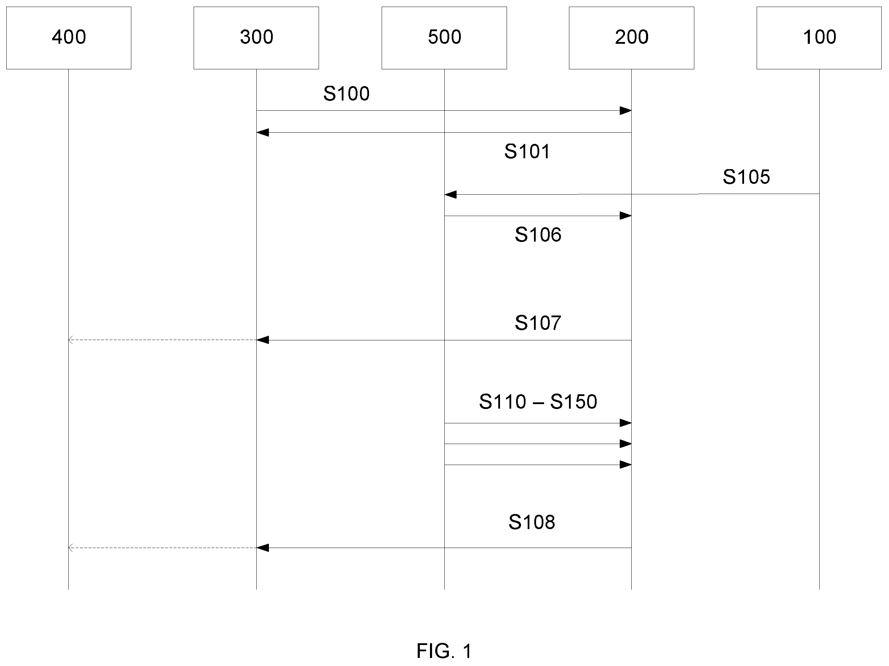

FIG 1 illustrates the interaction between a computer related method, an application - App, user and data storage, when continuously evolving or updating the generic user profiles.

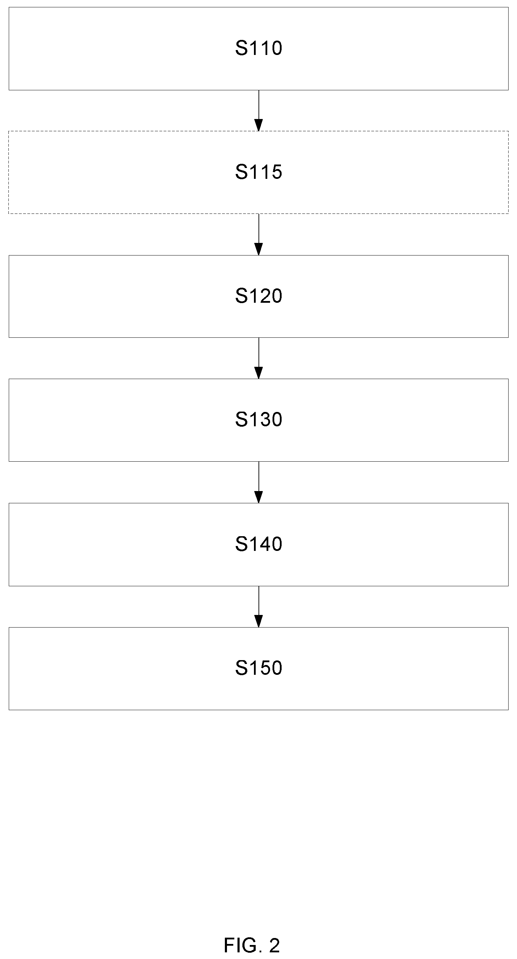

FIG 2 to 4 illustrates the method performed by the App.

The interaction, as shown in FIG 1, typically comprises the following steps:
1) An App developer publishes an App S100 on a Server of the App developer 300.
2) A Track backend 200, a cloud server(s) where Apps and devices report different events that is relevant, communicates S101 with the server of the App developer 300 and sends a message of acceptance to the server when the App is published.
3) The App is launched S105 on an electronic communication device 100, e.g. mobile phone, of User A 10 and the App communicates S106 with the Track backend 200 that the Apps has been launched.
4) If User A is new, i.e. does not exist in user profile database 600, a user profile of user A is initiated by bootstrapping S115 a matching user profile of an existing user B. This event may be reported S107 by the Track backend 200 to the App developer 300 and Ad network 400 if they subscribe to such event.
5) The App 500 starts to log and report S110-S150 the activity or behaviour of user A to Track backend 200. User A is profiled and adopted to real usage based on the logged activity or behaviour.
6) After sometimes it is detected that user A has a profile similar to other users that is grouped into a dynamic group, e.g. group X. User A may then get classified S210-225 as a member of group X. This event may be reported S108 by the Track backend 200 to the App developer 300 and Ad network 400 if they subscribe to such event.

Ad networks and App developer may subscribe to changes within the generic user profiles. This information may then be used to advertise/sell new apps or updates of apps, thus the usage of user actions behaviour and in-app achievements improve application discovery.

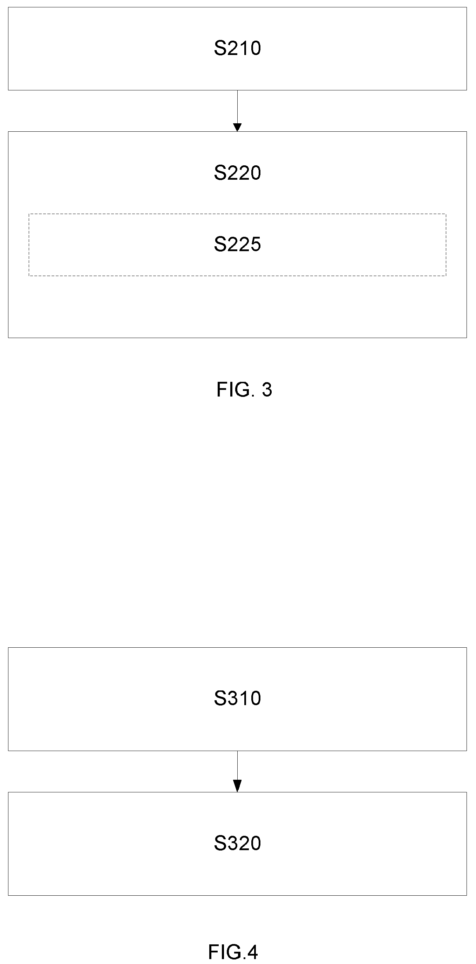

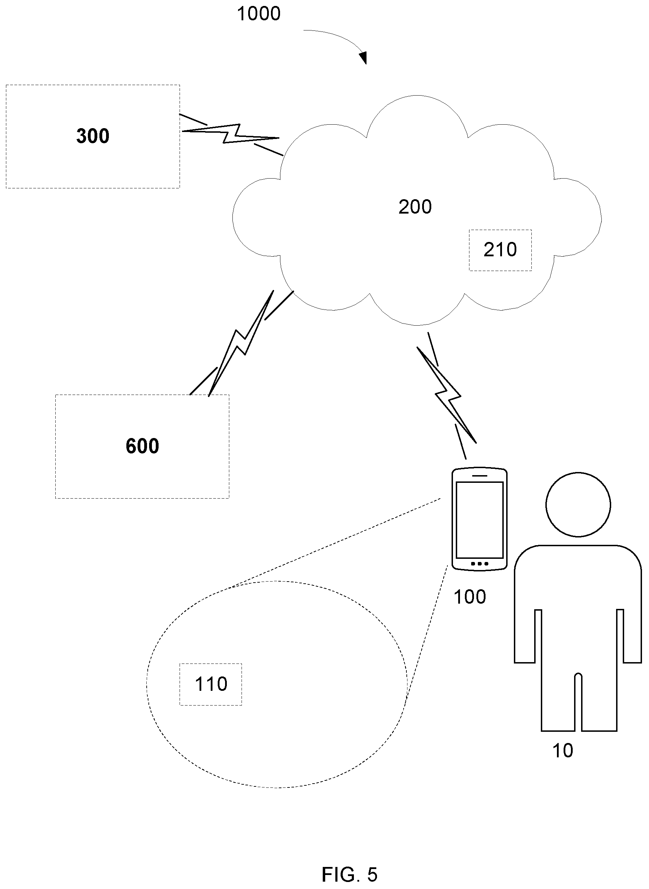

FIG 3 is a flow diagram depicting example operations which may be taken by a profiling system 100, shown in FIG 5, for providing generic user profile based on user behaviour data comprising a data storage 600 comprising at least one generic user profile, an electronic communication unit 100 comprising an application, App, for providing a generic user profile based on user behaviour data of a user 10 thereof. All steps performed will be described hereafter in a logical order of the steps and not in the order of which the device performs which step.

According to some aspects, the method of the profiling system comprises providing access S110 to data storage 600 comprising at least one generic user profile.

The method further comprises continuously logging S120 user behaviour data defining a behaviour or activity of the user. Examples of user activity or behaviour is social activities/behaviour such as using Facebook, working, being at home, exercising at the gym, online activities/behaviour such as playing a game, reading books from a specific category, reading articles of a specific topic, listening to music, listening to a specific radio program, physical activities/behaviour such as how many times you are repeating an exercise at the gym machine.

The method further comprises transmitting S130 the logged user behaviour data to a processing unit 110, 210 for processing the logged user behaviour data. The processing unit may be a processing unit of the communication device 100 or a cloud server 200.

The method further comprises continuously updating S140 the generic user profile of the user based on the processed user behaviour data.

The method further comprises continuously updating S150 the user profiles of all computer related applications, Apps, installed on the electronic communication unit of the user based on the updated generic user profile. One example is that if a user is playing a game in a specific genre and getting higher skill levels due to practice, the generic user profile will be updated based on this enhanced gaming skills, user behaviour or activity. User profiles of other game applications will then be updated based on these enhanced gaming skills and when the user starts to play another game the user will start at a more accurate level.

In one embodiment the generic user profile comprises class related data and wherein the method further comprises continuously matching S210 the logged user behaviour data with user behaviour data in other generic user profiles within the data storage 600 for finding at least one user with a generic user profile comprising at least one similar user behaviour data, such as working at the same firm, playing the same game, working out at the same gym or shopping at the same store. In one aspect the matched generic user profiles may be classified S220 by updating the class related data of the matched generic user profiles based on the matched user behaviour data. Classifying may also be called grouping, since users with matched user behaviour is grouped based on their behaviour or activities. Examples of classes or groups may be "at work" class, "game" class, "at gym" class, "rock music" class.

In one aspect the class related data is based on matching user behaviour on a regular basis, such as working at the same firm. In one aspect the class related data is based on matching user behaviour during a shorter period, such as visiting Rom in Italy for one week.

In one embodiment, the generic user profile may updating by setting S225 a status of the class related data to "disabled", which is the same as disabling or deactivating one of the class related data, when the logged user behaviour data no longer matches the class related data of the other user profiles within the class or group, thus the user leaves the class or group, temporarily or forever. Examples may be when user no longer is in Rom in Italy the status of the "Rom" class related data is set to "disabled". The status of the "Rom" class related data may be set to "enabled" next time the user visit Rom. Another example is when the user go to work, the status of the "work" class related data will be set to enabled when i.e. the user logs on to the intranet of the firm and sets to disabled when the user logs out of the intranet and ends the working day.

In one embodiment, events S310 defined by when class related data is updated is monitored. In one aspect these monitored events is subscribed S320 by i.e. trusted parties, such as merchants, ad companies, etc. The parts that subscribes to these events may be able to direct information or ads to groups of user that are most likely to take interest of the information or ads related to the class or group. Examples may be, when a user enters the "Rom" class, the user is most likely to be interested of information of Rom and when the user leaves the "Rom" class the user is most likely not interested of Rom related information anymore. In one aspect the subscription may be limited in time. The limits may be set by the subscribing parties or the owner of the user profile.

In one embodiment, if the user 10 is new and do not have a generic user profile in the data storage 600 a generic user profile will be created S115 a by copying or bootstrapping another generic user profile within the data storage 600 with at least one user characteristics in common with the new user. Examples of user characteristics may be age, gender, location of living, location of work, education level. The new user and the other user may be Facebook friends, at the same age, same gender, living in the same geographical area or using the same or similar applications.

Figure 5 illustrates an example of a system 1000 for providing generic user profile based on user behaviour data, which may incorporate some of the example embodiments discussed above. The system comprises data storage 600 comprising at least one generic user profile, an electronic communication unit 100 comprising an application, App, for providing a generic user profile based on user behaviour data of a user. The App is a computer related method performed in an electronic communication device 100 of the user 10.

The electronic communication unit 100 is e.g. a smartphone, tablet or some other wireless devices that performs the functions of the App. The electronic communication unit comprises at least communication circuitry and processing circuitry.

In one embodiment a computer-readable storage medium including computer-executable instructions is provided. The computer-executable instructions that, when executed by one or more processor units 110, 210, perform operations comprising the steps of:
- providing access S110 to a data storage comprising at least one generic user profile;
- continuously logging S120 user behaviour data defining a behaviour of a user 10 of the method;
- transmitting S130 the logged behaviour data to a processing unit for processing the logged user behaviour data;
- continuously updating S140 the generic user profile of the user based on the processed user behaviour data; and
- updating S150 user profiles of all computer related applications installed on an electronic communication unit of the user based on the updated generic user profile.

In one embodiment the user profile comprises class related data and wherein the instructions further performs operations comprising the steps of:
- continuously matching S210 the logged user behaviour data with user behaviour data in generic user profiles within the data storage for finding at least one user with a generic user profile comprising at least one similar user behaviour data; and
- classifying S220 the matched generic user profiles by updating the class related data of the matched generic user profiles based on the matched user behaviour data.

In one embodiment the instructions further performs operations comprising the steps of:
- monitoring events S310 defined by when class related data is updated; and
- subscribing S320 to the monitored events.

In one embodiment the instructions performs operation of creating S115 a generic user profile of the user by copying a user profile within the data storage with at least one user characteristics in common with the user if a generic user profile of the user is not in the data storage.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

The foregoing has described the principles, preferred embodiments and modes of operation of the present invention. However, the invention should be regarded as illustrative rather than restrictive, and not as being limited to the particular embodiments discussed above. The different features of the various embodiments of the invention can be combined in other combinations than those explicitly described. It should therefore be appreciated that variations may be made in those embodiments by those skilled in the art without departing from the scope of the present invention as defined by the following claims.

## Claims

1. A computer related method (500) for providing generic user profile based on user behaviour data, the method comprises:
• providing access (S110) to a data storage (600) comprising at least one generic user profile;
• continuously logging (S120) user behaviour data defining a behaviour of a user (10) of the method;
• transmitting (S130) the logged behaviour data to a processing unit (110, 210) for processing the logged user behaviour data;
• continuously updating (S140) the generic user profile of the user based on the processed user behaviour data; and
• updating (S150) user profiles of all computer related applications installed on an electronic communication unit (100) of the user (10) based on the updated generic user profile.

2. The method (500) according to claim 1, wherein the generic user profile comprises class related data and wherein the method further comprises:
• continuously matching (S210) the logged user behaviour data with user behaviour data in generic user profiles within the data storage (600) for finding at least one user with a generic user profile comprising at least one similar user behaviour data; and
• classifying (S220) the matched generic user profiles by updating the class related data of the matched generic user profiles based on the matched user behaviour data.

3. The method (500) according to claim 2, wherein the method further comprises:
• updating the generic user profile by setting (S225) a status of the class related data to "disabled" when the logged user behaviour data no longer match the class related data.

4. The method (500) according to claim 2, wherein said method further comprising:
• monitoring events (S310) defined by when class related data is updated; and
• subscribing (S320) to the monitored events.

5. The method (500) according to claim 4, wherein the subscription is limited in time.

6. The method (500) according to any of claim 1-5, wherein said method further comprising:
• creating (S115) a generic user profile of the user by copying a user profile within the data storage (600) with at least one user characteristics in common with the user if a generic user profile of the user is not in the data storage.

7. A system (100) for providing generic user profile based on user behaviour data, comprising:
• a data storage (600) comprising at least one generic user profile;
• an electronic communication unit (100) comprising a computer related application (500) for providing a generic user profile based on user behaviour data of a user (10) of the electronic communication device (100), wherein the application is configured to:
i. providing access (S110) to the data storage (600) comprising at least one generic user profile;
ii. continuously logging (S120) user behaviour data defining a behaviour of the user (10) of the application (500);
iii. transmitting (S130) the logged behaviour data to a processing unit (110, 210) for processing the logged user behaviour data;
iv. continuously updating (S140) the generic user profile of the user based on the processed user behaviour data; and
v. updating (S150) user profiles of all computer related applications installed on the electronic communication unit (100) of the user based on the updated generic user profile.

8. The system according to claim 7, wherein said user profile comprises class related data and wherein the application (500) is further configured to:
• continuously matching (S210) the logged user behaviour data with user behaviour data in generic user profiles within the data storage for finding at least one user with a generic user profile comprising at least one similar user behaviour data; and
• classifying (S220) the matched generic user profiles by updating the class related data of the matched generic user profiles based on the matched user behaviour data.

9. The system according to claim 8, wherein the application (500) is further configured to:
• updating the generic user profile by setting (S225) a status of the class related data to "disabled" when the logged user behaviour data no longer match the class related data.

10. The system according to claim 9, wherein said application (500) is further configured to:
• monitoring events (S310) defined by when class related data is updated; and
• subscribing (S320) to the monitored events.

11. The system according to any of claim 7-10, wherein the application (500) is further configured to:
• creating (S115) a generic user profile of the user by copying a user profile within the data storage (600) with at least one user characteristics in common with the user if a generic user profile of the user is not in the data storage.

12. A computer-readable storage medium including computer-executable instructions (500) that, when executed by one or more processing units (110, 210), perform operations comprising:
• providing access (S110) to a data storage (600) comprising at least one generic user profile;
• continuously logging (S120) user behaviour data defining a behaviour of a user (10);
• transmitting (S130) the logged behaviour data to the one or more processing units (110, 200) for processing the logged user behaviour data;
• continuously updating (S140) the generic user profile of the user based on the processed user behaviour data; and
• updating (S150) user profiles of all computer related applications installed on an electronic communication unit (100) of the user based on the updated generic user profile.

13. The computer-readable storage medium according to claim 12, wherein said user profile comprises class related data and wherein the instructions further perform operations comprising:
• continuously matching (S210) the logged user behaviour data with user behaviour data in generic user profiles within the data storage (600) for finding at least one user with a generic user profile comprising at least one similar user behaviour data; and
• classifying (S220) the matched generic user profiles by updating the class related data of the matched generic user profiles based on the matched user behaviour data.

14. The computer-readable storage medium according to claim 13, wherein said instructions further perform operations comprising:
• monitoring events (S310) defined by when class related data is updated; and
• subscribing (S320) to the monitored events.

15. The computer-readable storage medium according to any of claim 12-14, wherein said instructions further perform operations comprising:
• creating (S115) a generic user profile of the user by copying a user profile within the data storage (600) with at least one user characteristics in common with the user if a generic user profile of the user is not in the data storage.
